# EUROPEAN PATENT SPECIFICATION

(11) **EP 2 852 638 B1**
(45) Date of publication and mention of the grant of the patent: **07.10.2015**
(21) Application number: 13723107.2
(22) Date of filing: 14.05.2013
(51) Int. Cl.: C09B 69/10, C11D 3/37

(54) **ALKYLATED POLYETHYLENEIMINE DYE**
ALKYLIERTER POLYETHYLENIMIN-FARBSTOFF
COLORANT DE TYPE POLYÉTHYLÈNE-IMINE ALKYLÉ

(30) Priority: 16.05.2012 EP 12168345
(43) Date of publication of application: 01.04.2015
(73) Proprietor: Unilever PLC, London, Greater London EC4Y 0DY (GB); Unilever N.V., 3013 AL Rotterdam (NL)
(72) Inventor: BATCHELOR, Stephen, Norman, Wirral Merseyside CH63 3JW (GB); BIRD, Jayne, Michelle, Wirral Merseyside CH63 3JW (GB); DEVINE, Karen, Maria, Wirral Merseyside CH63 3JW (GB)
(74) Representative: Avila, David Victor
(86) International application number: PCT/EP2013/059940
(87) International publication number: WO 2013/171211

(56) References cited:
- WO-A1-2011/047987
- US-A- 5 565 145

## Description

### Field of Invention

The invention concerns alkylated polyethyleneimine dyes for use in home and personal care.

### Background of the invention

WO2011/047987 discloses a reactive dye covalently bound to polyethyleneimine polymers, non-alkylated alkoxylated polyethylenelmine dyes, for use in laundry detergent formulations to whiten fabric.

US5565145 discloses alkoxylated ethylene imine polymers without dyes present; the alkoxylated ethylene imine polymers are disclosed as soil dispersing agents.

There is a need to improve the whitening performance of reactive dyes covalently bound to polyethyleneimine in laundry detergents.

### Summary of the Invention

We have found that alkylated alkoxylated polyethylenelmine dyes give enhanced performance in whitening textiles during laundry processes.

In one aspect the present invention provides an alkylated alkoxylated polyethylenelmine dye, wherein the alkylated alkoxylated polyethylenelmine dye is a polyethyleneimine having covalently bound to the nitrogen groups of the polyethyleneimine:
(i) a blue or violet reactive dye;
(ii) an alkylene oxide; and,
(iii) an alkylene chain, preferably linear C1-C8, most preferably C2.

In another aspect the present invention provides a laundry treatment composition comprising:
(i) from 2 to 70 wt% of a surfactant; and,
(ii) from 0.01 to 20.0 wt%, preferably from 0.1 to 4 wt%, of the alkylated alkoxylated polyethylenelmine dye.

In a further aspect the present invention provides a domestic method of treating a textile, the method comprising the steps of:
(i) treating a textile with an aqueous solution of the alkylated alkoxylated polyethylenelmine dye, the aqueous solution comprising from 100 ppb to 5000 ppm, preferably from 10 to 100ppm, of the alkylated alkoxylated polyethylenelmine dye; and, from 0.0 g/L to 3 g/L of a surfactant; preferably from 0.2 to 3 g/L, most preferably from 0.3 to 0.6g/L, and,
(ii) optionally rinsing and drying the textile.

### Detailed Description

Alkylated alkoxylated polyethylenelmine dyes give enhanced performance in whitening textiles during laundry processes. The alkylated alkoxylated polyethylenelmine dyes are preferably used with non-alkylated alkoxylated polyethylenelmine dyes.

The mixture may be provided by alkylating PEI with less than one mole equivalent of an alkylating agent followed by teathering of reactive dye and alkoxylation. Conversely, alkylated alkoxylated polyethylenelmine dye may be mixed with non-alkylated alkoxylated polyethylenelmine dye.

Non-alkylated alkoxylated polyethylenelmine dye are described in detail in WO2011/047987.

Preferably the mol ratio of non-alkylated alkoxylated polyethylenelmine dyes to alkylated alkoxylated polyethylenelmine dyes is from 10:1 to 1:100, most preferably 5:1 to 1:5.

Preferably the PEI has from 6 to 100 Nitrogen atoms, more preferably 12 to 40, even more preferably from 18 to 36.

Preferably the only N's in the alkylated alkoxylated polyethylenelmine are in the central polyethyleneimine (PEI).

Preferably the PEI before reaction with the alkoxy or alkyl moieties contains at least 3 primary or secondary amines.

Alkylation is the covalent bonding of an alkyl group to the polyethyleneimine. Preferably the alkyl group is C1 to C8, branched, linear or cyclic, most preferably methyl or ethyl. The alkyl group does not have an aryl substituent but may carry non-aromatic substituents. The alkylation is preferably carried out by treating the amine(s) of the PEI with an electrophilic alkylation agent.

Preferred common alkylating agents include dialkyl sulphates (especially dimethyl and diethyl sulphates), alkyl bromides and iodides, alkyl tosylates and the like.

PEI may be alkylated using a wide variety of alkylating agents. Suitable alkylating agents include dialkyl sulfates, alcohols, alkyl halides, olefins, and carbonyl compounds. These reactions are described in Ullmann's Encyclopedia of Industrial Chemistry, Acylation and Alkylation, Michael Röper, Eugen Gehrer, Thomas Narbeshuber & Wolfgang Siegel (John Wiley ISBN: 9783527306732) and in KIRK-OTHMER ENCYCLOPEDIA OF CHEMICAL TECHNOLOGY, Vol 8, DIAMINES AND HIGHER AMINES, ALIPHATIC (John Wiley ISBN: 9780471238966).

Preferably there are one or two mol equivalents of alkyl groups per one mole of PEI.

Alkoxylated PEI are PEI's, where a single or number of amine functions are reacted with alkoxy moieties to form an alkoxy side chain. The alkoxy side chains may be formed by reaction of the PEI with an alkylene oxide, preferably ethylene oxide, propylene oxide or mixtures thereof.

Preferably the alkoxy side chain is added by the reaction of the PEI, with a preformed alkoxy chain, which contains a reactive group that reacts with primary or secondary amines of the PEI to form a covalent bond. Examples of reactive groups are selected from epoxides, alkenes, a sulfooxyethylsulfonyl reactive group (-SO₂CH₂CH₂OSO₃Na), heterocyclic reactive groups and leaving groups such as tosylate. The heterocyclic reactive groups are preferably nitrogen contains aromatic rings bound to a halogen or an ammonium group, which react with NH₂ or NH groups to form a covalent bond. The halogen is preferred. More preferred heterocylic reactive groups are dichlorotriazinyl, difluorochloropyrimidine, monofluorotrazinyl, monofluorochlorotrazinyl, dichloroquinoxaline, difluorotriazine, monochlorotriazinyl, and trichloropyrimidine. Preferably the alkoxy chain contains only 1 reactive group, to avoid cross-linking reactions, and the other chain end is alkyl capped.

The alkoxy chains are preferably selected from ethoxy or propoxy groups. Most preferably ethoxy. Preferably the alkoxy chain contain 5 to 50 alkoxyl repeat unit, more preferably 10 to 20.

The alkylated alkoxylated PEI are PEI's, where a single or a number of amine functions of the PEI, are reacted with one or more alkyl containing moieties to form an alkyl side and a single or number of amine functions are reacted with to form an alkoxy side chain.

The polymer are dyed by mixing with reactive dyes under alkaline conditions, preferably pH=10 to 11. Heating to, for example 300- 350K, accelerates the reaction.

Following dyeing the mixture should be neutralised to pH 7.

The PEI may be alkylated, alkoxylated then reactively dyed. The PEI may be alkoxylated then alkylated then reactively dyed. Preferably the PEI is alkylated then reactively dyed then alkoxylated.

The polymers give enhance anti-re-deposition benefit in detergent formulation where the fraction of (wt% non-ionic)/(wt% anionic surfactant) is greater than 0.6, preferably greater than 0.95.

### Reactive Dyes

Reactive dyes are described in Industrial Dyes (K.Hunger ed, Wiley VCH 2003). Many Reactive dyes are listed in the colour index (Society of Dyers and Colourists and American Association of Textile Chemists and Colorists).

Reactive dyes consist of a dye chromophore covalently bound to a reactive group. Reactive groups react with primary and secondary amines to form a covalent bound, preferably by a substitution or addition reaction.

Blue and violet dye chromophores are preferably selected from anthraquinone, bis-azo, triphenodioxazine, and phthalocyanine, more preferably anthraquinone and bis-azo, most preferably bis-azo.

Red and violet reactive dyes may be mixed with the blue and violet reactive dyes to provide the correct hue. Reactive red dye chromophores are preferably selected from mono and bis-azo dyes.

A preferred blue bis-azo dye is of the form:

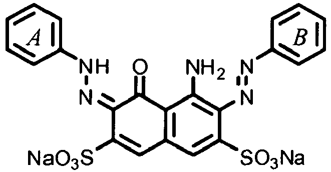

Where one or both of the A and B rings are substituted by a reactive group. Surprisingly blue bis-azo dyes provide a delightful violet hue when bound to PEI polymers.

The A and B rings may be further substituted by sulphonate groups (SO₃Na).

The A and B rings may be further substituted with suitable uncharged organic groups, preferably with a molecular weight lower than 200. Preferred groups are -CH₃, -C₂H₅, and -OCH₃.

Preferred blue bis-azo dye dyes are Reactive Black 5, Reactive Blue 171, Reactive Blue 154, Reactive Blue 184, Reactive Blue 207, Reactive Blue 214, Reactive Blue 217, Reactive Blue 203, Reactive Blue 225, Levafic Navy CA, Procion Navy H-EXL, Reactive Blue 176, Reactive Blue 109, Reactive Blue 230, Reactive Blue 225, Reactive Blue 222, Reactive Blue 250 and Reactive Blue 281.

A preferred blue anthraquinone dye is of the form: 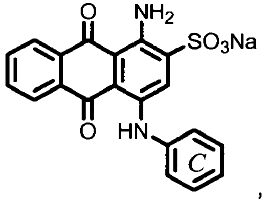 where the C ring is substituted by a reactive group. The dye may be further substituted with sulphonate groups (SO₃Na) and suitable uncharged organic groups, preferably with a molecular weight lower than 200. Preferred uncharged organic groups are-CH₃, -C₂H₅, and -OCH₃.

A preferred triphenodioxazine dye is of the form:

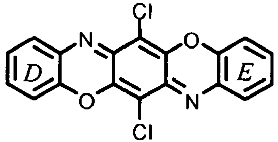

Where the D and E rings are substituted by a reactive groups. Preferably the D and E rings are further substituted by sulphonate groups (SO₃Na).

A preferred red azo dye is of the form

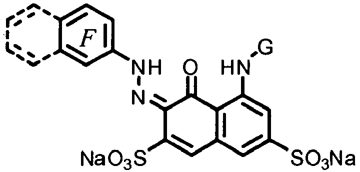

Where the F ring is optionally extended to form a naphthyl group are optionally substituted groups selected from sulphonate groups (SO₃Na) and a reactive group.

G is selected from a reactive group, H, or alky group. A reactive group must be present on the dye.

With the exception of copper phthalocyanine dyes, metal complex dyes are not preferred.

Reactive groups are preferably selected from heterocyclic reactive groups and, a sulfooxyethylsulfonyl reactive group (-SO₂CH₂CH₂OSO₃Na).

The heterocyclic reactive groups are preferably nitrogen contains aromatic rings bound to a halogen or an ammonium group, which react with NH₂ or NH groups of the polymers to form a covalent bond. The halogen is preferred. More preferred heterocylic reactive groups are dichlorotriazinyl, difluorochloropyrimidine, monofluorotrazinyl, monofluorochlorotrazinyl, dichloroquinoxaline, difiluorotriazine, monochlorotriazinyl, and trichloropyrimidine.

The reactive group may be linked to the dye chromophore via an alkyl spacer for example: dye-NH-CH₂CH₂-reactive group.

Especially preferred heterocylic reactive groups are: 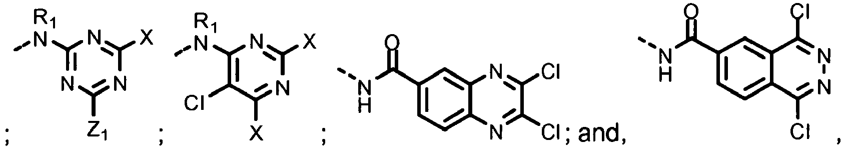 wherein R₁ is selected from H or alkyl, preferably H.
X is selected from F or Cl.
When X = Cl, Z₁ is selected from -Cl, -NR₂R₃, -OR₂, -SO₃Na
When X = F, Z₁ is selected from -NR₂R₃
R₂ and R₃ are independently selected from H, alkyl and aryl groups. Aryl groups are preferably phenyl and are preferably substituted by -SO₃Na or-SO₂CH₂CH₂OSO₃Na. Alkyl groups are preferably methyl or ethyl.

The phenyl groups may be further substituted with suitable uncharged organic groups, preferably with a molecular weight lower than 200. Preferred groups include -CH₃, -C₂H₅, and -OCH₃.

The alkyl groups may be further substituted with suitable uncharged organic groups, preferably with a molecular weight lower than 200. Preferred groups include -CH₃, -C₂H₅, -OH, -OCH₃, -OC₂H₄OH.

Most preferred heterocylic reactive groups are selected from:

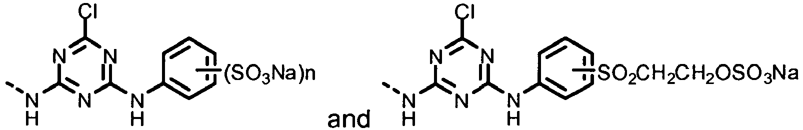

Where n = 1 or 2, preferably 1.

Preferably the reactive dye contains more than one reactive group, preferably two or three.

A hydrolysed reactive dyes is one in which the reactive groups has reacted with the hydroxide anion, HO⁻, rather than the polymer. Preferably the composition contains less than 100ppm of hydrolysed reactive dye per 10000ppm dye-polymer, more preferably less than 20ppm. Most preferably hydrolysed reactive dyes are not present in the composition. Such dyes may be removed by dialysis or careful control of the reaction conditions.

Preferably the dye-polymers of the invention as received from the synthetic procedure have less than 1000ppm of material with weight average molecular weight lower than 1500, more preferably less than 5ppm, when 10 000ppm of dye polymer is present in aqueous solution. Low molecular weight material may be removed by dialysis or avoided by careful control of the reaction conditions.

Examples of reactive dyes are reactive blue 2, reactive blue 4, reactive blue 5, reactive blue 7, reactive blue 15, reactive blue 19, reactive blue 27, reactive blue 29, reactive blue 49, reactive blue 50, reactive blue 74, reactive blue 94, reactive blue 171, reactive blue 246, reactive blue 247, reactive blue 247, reactive blue 166, reactive blue 109, reactive blue 187, reactive blue 213, reactive blue 225, reactive blue 238, reactive blue 256.

Further structures are exemplified below: 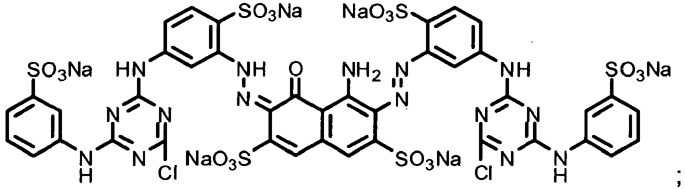 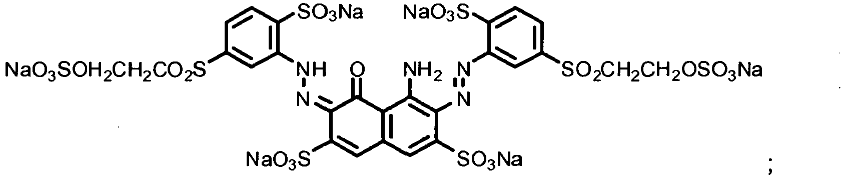 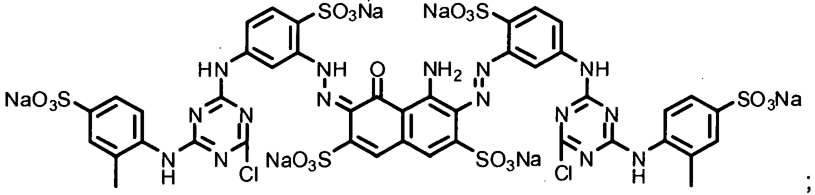 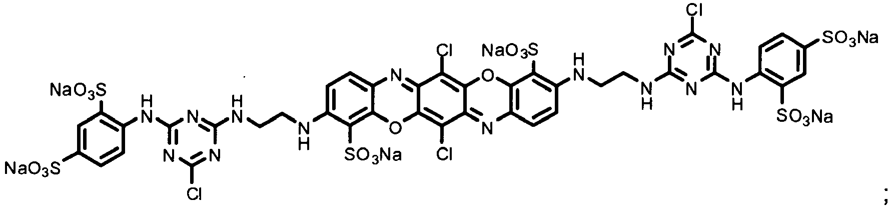 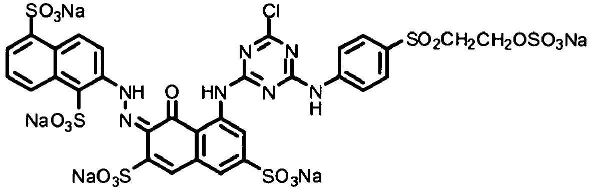 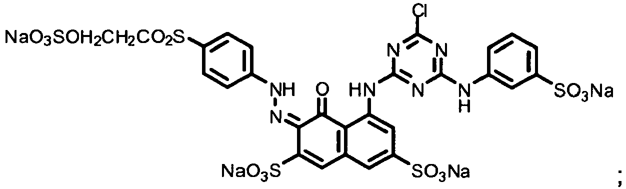 and

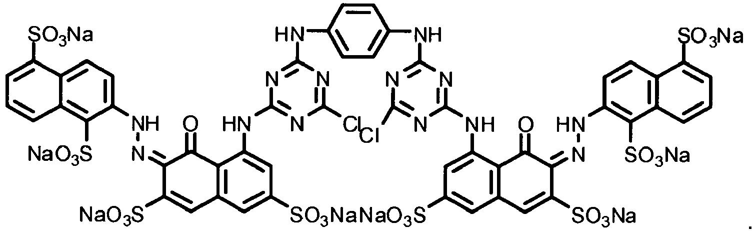

### Examples

### Polymer type A: (reference)--an ethoxylated PEI covalently bound to a dye

A 1300 molecular weight PEI core was react with tosylated monomethyl polyethylene glycol to give an ethoxylated PEI. The mol ratio of PEI: tosylated monomethyl polyethylene glycol was 1:1. The polyethylene glycol had a chain with an average of 13 ethoxylate groups. The polymer was then reacted with 5wt% on PEI of reactive dye. The reactive dye used was Reactive Blue 171.

### Polymer type B--an ALKYLATED ethoxylated PEI covalently bound to a dye

A 1300 molecular weight PEI core was react dimethyl sulphate in the mol ratio 10:1. The procedure of Polymer A was then repeated, to give a reactively dyed alkylated, ethoxylated PEI's.

The following liquid compositions were made:

| | Wt% | | |
|---|---|---|---|
| | Blank formulation | Polymer A formulation | Polymer B formulation |
| LAS | 4.9 | 4.9 | 4.9 |
| NI(7EO) | 7.3 | 7.3 | 7.3 |
| SLES(3EO) | 2.4 | 2.4 | 2.4 |
| Alkyl Betaine | 0.9 | 0.9 | 0.9 |
| 1,2-propanediol | 15 | 15 | 15 |
| Triethanolamine | 2 | 2 | 2 |
| Perfume | 1.4 | 1.4 | 1.4 |
| Polymer A | 0 | 3.5 | 0 |
| Polymer B | 0 | 0 | 3.5 |
| Water | remainder | remainder | remainder |

LAS is sodium C₁₁ to C₁₅ alkyl benzene sulphonate.
NI(7EO) is R-(OCH₂CH₂)ₙOH, where R is an alkyl chain of C12 to C15, and n is 7. SLES(3EO) is sodium lauryl ether sulfate with 3 ethoxy groups.
The Alkyl Betaine used was Empigen BB (ex Huntsman).
All values are wt%.

The compositions were used to wash a mixture of white fabrics: woven cotton, , micro-fibre polyester, and knitted nylon-elastane at a Liquor to cloth ratio of 10:1 in a shaker bottle (150rpm on an orbital shaker). The fabrics were of equal area. 26° French hard water was used and each wash lasted 30 minutes and was followed by a running rinse. The compositions were all used at 2.3g/L.

The white clothes were removed, dried and the colour measured using a relflectometer and expressed as the CIE L*a*b* values. The blueing (whitening) of the dye-polymer was expressed as the • b value
• b = b(control) - b (dye polymer)

The cotton results are shown below.

| | • b |
|---|---|
| Polymer A (reference) | 4.2 |
| Polymer B | 4.8 |

Polymer B gives more blueing (whitening) than Polymer A as shown by the higher • b values.

## Claims

1. An alkylated alkoxylated polyethylenelmine dye, wherein the alkylated alkoxylated polyethylenelmine dye is a polyethyleneimine having covalently bound to the nitrogen groups of the polyethyleneimine:
(i) a blue or violet reactive dye;
(ii) an alkylene oxide; and,
(iii) an alkylene chain.

2. An alkylated alkoxylated polyethylenelmine dye according to claim 1, wherein the polyethyleneimine is one having from 6 to 100 nitrogen atoms.

3. An alkylated alkoxylated polyethylenelmine dye according to claim 2, wherein the polyethyleneimine is one having from preferably 12 to 40 nitrogen atoms.

4. An alkylated alkoxylated polyethylenelmine dye according to any one of claims 1 to 3, wherein the alkylene chain having a pendent alkyl group is covalently bound to the PEI by the reaction of an amine of polyethyleneimine with dialkyl sulfates, alcohols, alkyl halides, olefins, and carbonyl compounds.

5. An alkylated alkoxylated polyethylenelmine dye according to any one of claims 1 to 4, wherein the blue and violet dye chromophore of the reactive dye is selected from: anthraquinone; bis-azo; triphenodioxazine; and, phthalocyanine.

6. An alkylated alkoxylated polyethylenelmine dye according to claim 5, wherein the blue and violet dye chromophore of the reactive dye is bis-azo.

7. An alkylated alkoxylated polyethylenelmine dye according to any one of the preceding claims, wherein the reactive dye has reactive group selected from the group comprising: dichlorotriazinyl; difluorochloropyrimidine; monofluorotrazinyl; dichloroquinoxaline; vinylsulfone; difluorotriazine; monochlorotriazinyl; bromoacrlyamide; and, trichloropyrimidine.

8. An alkylated alkoxylated polyethylenelmine dye according to claim 6, wherein the blue or violet reactive dye is selected from: Reactive Black 5; Reactive Blue 171; Reactive Blue 154; Reactive Blue 184; Reactive Blue 207; Reactive Blue 214; Reactive Blue 203; Reactive Blue 217; Reactive Blue 225; Levafic Navy CA; Procion Navy H-EXL; Reactive Blue 176; Reactive Blue 109; Reactive Blue 230; Reactive Blue 225; Reactive Blue 222; Reactive Blue 250; Reactive Blue 281; and,

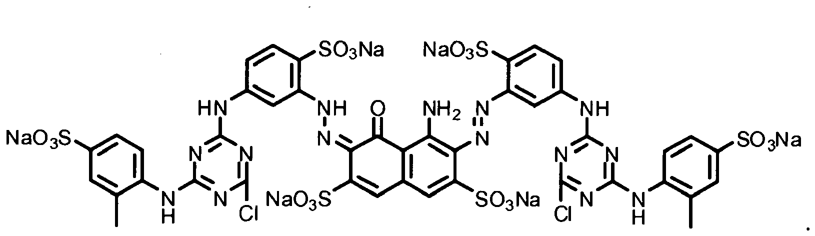

9. An alkylated alkoxylated polyethylenelmine dye according to any one of the preceding claims, wherein the alkylene oxide is a polyalkylene oxide.

10. An alkylated alkoxylated polyethylenelmine dye according to claim 9, wherein the alkoxy chain of the alkylene oxide is selected from: ethoxy; and, propoxy groups.

11. An alkylated alkoxylated polyethylenelmine dye according to claim 10, wherein the alkoxy chain contains from 5 to 50 alkoxyl repeat units.

12. An alkylated alkoxylated polyethylenelmine dye according to claim 11, wherein the alkoxy chain contains 10 to 20 repeat units.

13. An alkylated alkoxylated polyethylenelmine dye according to any one of the preceding claims, wherein only one or two of the nitrogens of the polyethyleneimine are alkoxylated.

14. An alkylated alkoxylated polyethylenelmine dye according to any one of the preceding claims, wherein only one reactive dye is covalently bound to the polyethyleneimine.

15. A laundry treatment composition comprising:
(i) from 2 to 70 wt% of a surfactant; and,
(ii) from 0.01 to 20.0 wt% of the alkylated alkoxylated polyethylenelmine dye as defined in any one of claims 1 to 14.

16. A laundry treatment composition according to claim 15, comprising: (iii) a non-alkylated alkoxylated polyethylenelmine dye, wherein the mol ratio of non-alkylated alkoxylated polyethylenelmine dye to alkylated alkoxylated polyethylenelmine dye is in the range from 10:1 to 1:100.

17. A domestic method of treating a textile, the method comprising the steps of:
(i) treating a textile with an aqueous solution of the alkylated alkoxylated polyethylenelmine dye as defined in any one of claims 1 to 14, the aqueous solution comprising from 100 ppb to 5000 ppm, of the alkylated alkoxylated polyethylenelmine dye; and, from 0.0 g/L to 3 g/L of a surfactant; and,
(ii) optionally rinsing and drying the textile.

18. A domestic method of treating a textile according to claim 17, comprising: (iii) a non-alkylated alkoxylated polyethylenelmine dye, wherein the mol ratio of non-alkylated alkoxylated polyethylenelmine dye to alkylated alkoxylated polyethylenelmine dye is in the range from 10:1 to 1:100.

19. A domestic method of treating a textile according to claim 17 or 18, wherein the aqueous solution comprises from 0.2 to 3 g/L of a surfactant.

20. A domestic method of treating a textile according to claim 18 or 19, wherein the aqueous solution comprises a fluorescer in the range from 0.0001 g/l to 0.1 g/l

## Patentansprüche

1. Alkylierter alkoxylierter Polyethylen im infarbstoff, wobei der alkylierte alkoxylierte Polyethyleniminfarbstoff ein Polyethylenimin ist mit an die Stickstoffgruppen des Polyethylenimins kovalent gebundenen:
(i) einem blauen oder violetten Reaktivfarbstoff:
(ii) einem Alkylenoxid; und
(iii) einer Alkylenkette.

2. Alkylierter alkoxylierter Polyethyleniminfarbstoff gemäß Anspruch 1, wobei das Polyethylenimin eines mit 6 bis 100 Stickstoffatomen ist.

3. Alkylierter alkoxylierter Polyethyleniminfarbstoff gemäß Anspruch 2, wobei das Polyethylenimin eines mit vorzugsweise 12 bis 40 Stickstoffatomen ist

4. Alkylierter alkoxylierter Polyethyleniminfarbstoff gemäß irgendeinem der Ansprüche 1 bis 3, wobei die Alkylenkette mit einer Alkyl-Seitengruppe durch die Reaktion eines Amins von Polyethylenimin mit Dialkylsulfaten, Alkoholen, Alkylhalogeniden, Olefinen und Carbonylverbindungen kovalent an das PEI gebunden ist.

5. Alkylierter alkoxylierter Polyethyleniminfarbstoff gemäß irgendeinem der Ansprüche 1 bis 4, wobei der blaue und violette Farbstoffchromophor des reaktiven Farbstoffs ausgewählt ist aus: Anthrachinon; bis-Azo; Triphenodioxazin; und Phthalocyanin.

6. Alkylierter alkoxylierter Polyethyleniminfarbstoff gemäß Anspruch 3, wobei der blaue und violette Farbstoffchromophor des reaktiven Farbstoffs bis-Azo ist.

7. Alkylierter alkoxylierter Polyethyleniminfarbstoff gemäß irgendeinem der vorhergehenden Ansprüche, wobei der reaktive Farbstoff eine reaktive Gruppe hat, die ausgewählt ist aus der Gruppe umfassend: Dichlortriazinyl; Difluorchlorpyrimidin; Monofluortriazinyl; Dichlorchinoxalin; Vinylsulfon; Difluortriazin; Monochlortriazinyl; Bromacrylamid; und Trichlorpyrimidin.

8. Alkylierter alkoxylierter Polyethyleniminfarbstoff gemäß Anspruch 6, wobei der blaue oder violette reaktive Farbstoff ausgewählt ist aus: Reaktivschwarz 5; Reaktivblau 171; Reaktivblau 154; Reaktivblau 184; Reaktivblau 207; Reaktivblau 214; Reaktivblau 203; Reaktivblau 217; Reaktivblau 225; Levafic Navy CA; Procion Navy H-EXL; Reaktivblau 176; Reaktivblau 109; Reaktivblau 230; Reaktivblau 225; Reaktivblau 222; Reaktivblau 250; Reaktivblau 281; und

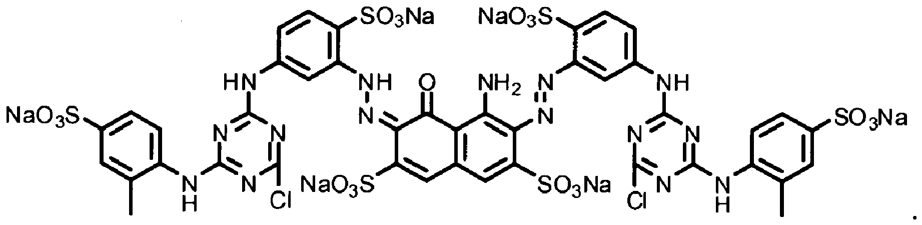

9. Alkylierter alkoxylierter Polyethyleniminfarbstoff gemäß irgendeinem der vorhergehenden Ansprüche, wobei das Alkylenoxid ein Polyalkylenoxid ist.

10. Alkylierter alkoxylierter Polyethyleniminfarbstoff gemäß Anspruch 9, wobei die Alkoxykette des Alkylenoxids aus: Ethoxy- und Propoxygruppen ausgewählt ist.

11. Alkylierter alkoxylierter Polyethyleniminfarbstoff gemäß Anspruch 10, wobei die Alkoxykette 5 bis 50 Alkoxyl-Grundeinheiten enthält.

12. Alkylierter alkoxylierter Polyethyleniminfarbstoff gemäß Anspruch 11, wobei die Alkoxykette 10 bis 20 Grundeinheiten umfasst.

13. Alkylierter alkoxylierter Polyethyleniminfarbstoff gemäß irgendeinem der vorhergehenden Ansprüche, wobei nur eines oder 2 der Stickstoffatome des Polyethylenimins alkoxyliert sind.

14. Alkylierter alkoxylierter Polyethyleniminfarbstoff gemäß irgendeinem der vorhergehenden Ansprüche, wobei nur ein reaktiver Farbstoff kovalent an das Polyethylenimin gebunden ist.

15. Wäschebehandlungszusammensetzung umfassend:
(i) 2 bis 70 Gew.-% eines Tensides; und
(ii) 0,01 bis 20,0 Gew.-% des alkylierten alkoxylierten Polyethyleniminfarbstoffs gemäß irgendeinem der Ansprüche 1 bis 14.

16. Wäschebehandlungszusammensetzung gemäß Anspruch 15, umfassend: (iii) einen nicht alkylierten alkoxylierten Polyethyleniminfarbstoff, wobei das Molverhältnis von nicht alkyliertem alkoxyliertem Polyethyleniminfarbstoff zu alkyliertem alkoxyliertem Polyethyleniminfarbstoff im Bereich von 10:1 bis 1:100 liegt.

17. Haushaltsverfahren zum Behandeln einer Textilie, wobei das Verfahren die Schritte umfasst von:
(i) Behandeln einer Textilie mit einer wässrigen Lösung des alkylierten alkoxylierten Polyethyleniminfarbstoffs gemäß irgendeinem der Ansprüche 1 bis 14, wobei die Lösung 100 ppb bis 5000 ppm des alkylierten alkoxylierten Polyethyleniminfarbstoffs umfasst; sowie 0,0 g/l bis 3 g/l eines Tensides; und
(ii) wahlweise Spülen und Trocknen der Textilie.

18. Haushaltsverfahren zum Behandeln einer Textilie gemäß Anspruch 17, umfassend: (iii) einen nicht alkylierten alkoxylierten Polyethyleniminfarbstoff, wobei das Molverhältnis von nicht alkyliertem alkoxyliertem Polyethyleniminfarbstoff zu alkyliertem alkoxyliertem Polyethyleniminfarbstoff im Bereich von 10:1 bis 1:100 liegt.

19. Haushaltsverfahren zum Behandeln einer Textilie gemäß Anspruch 17 oder 18, wobei die wässrige Lösung 0,2 bis 3 g/l eines Tensides umfasst.

20. Haushaltsverfahren zum Behandeln einer Textilie gemäß Anspruch 18 oder 19, wobei die wässrige Lösung eine fluoreszierende Substanz im Bereich von 0,0001 bis 0,1 g/l umfasst.

## Revendications

1. Colorant de polyéthylèneimine alcoxylée alkylée, dans lequel le colorant de polyéthylèneimine alcoxylée alkylée est une polyéthylèneimine présentant, liés de manière covalente aux groupes azote de la polyéthylèneimine :
(i) un colorant réactif bleu ou violet ;
(ii) un oxyde d'alkylène ; et
(iii) une chaîne alkylène.

2. Colorant de polyéthylèneimine alcoxylée alkylée selon la revendication 1, dans lequel la polyéthylèneimine est une ayant de 6 à 100 atomes d'azote.

3. Colorant de polyéthylèneimine alcoxylée alkylée selon la revendication 2, dans lequel la polyéthylèneimine est une ayant de préférence de 12 à 40 atomes d'azote.

4. Colorant de polyéthylèneimine alcoxylée alkylée selon l'une quelconque des revendications 1 à 3, dans lequel la chaîne alkylène ayant un groupe alkyle suspendu est liée de manière covalente à la PEI par la réaction d'une amine de polyéthylèneimine avec des sulfates de dialkyle, des alcools, des halogénures d'alkyle, des oléfines, et des composés carbonyle.

5. Colorant de polyéthylèneimine alcoxylée alkylée selon l'une quelconque des revendications 1 à 4, dans lequel le chromophore de colorant bleu et violet du colorant réactif est choisi parmi : l'anthraquinone ; le bis-azo ; la triphénodioxazine ; et la phtalocyanine.

6. Colorant de polyéthylèneimine alcoxylée alkylée selon la revendication 5, dans lequel le chromophore de colorant bleu et violet du colorant réactif est le bis-azo.

7. Colorant de polyéthylèneimine alcoxylée alkylée selon l'une quelconque des revendications précédentes, dans lequel le colorant réactif présente un groupe réactif choisi dans le groupe comprenant :
le dichlorotriazinyle ; la difluorochloropyrimidine ; le monofluorotrazinyle ; la dichloroquinoxaline ; la vinylsulfone ; la difluorotriazine ; le monochlorotriazinyle ; le bromoacrylamide ; et, la trichloropyrimidine.

8. Colorant de polyéthylèneimine alcoxylée alkylée selon la revendication 6, dans lequel le colorant réactif bleu ou violet est choisi parmi : Reactive Black 5 ; Reactive Blue 171 ; Reactive Blue 154 ; Reactive Blue 184 ; Reactive blue 207 ; Reactive Blue 214 ; Reactive Blue 203 ; Reactive Blue 217 ; Reactive Blue 225 ; Levafic Navy CA ; Procion Navy H-EXL ; Reactive Blue 176 ; Reactive Blue 109 ; Reactive Blue 230 ; Reactive Blue 225 ; Reactive Blue 222 ; Reactive Blue 250 ; Reactive Blue 281 ; et,

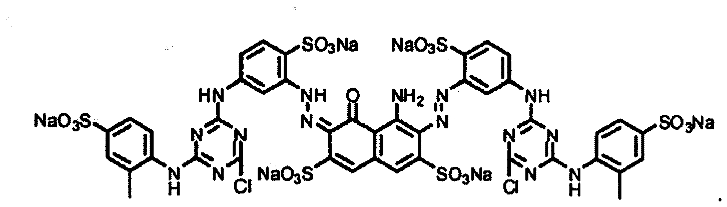

9. Colorant de polyéthylèneimine alcoxylée alkylée selon l'une quelconque des revendications précédents, dans lequel l'oxyde d'alkylène est un poly(oxyde d'alkylène).

10. Colorant de polyéthylèneimine alcoxylée alkylée selon la revendication 9, dans lequel la chaîne alcoxy de l'oxyde d'alkylène est choisi parmi : les groupes éthoxy ; et, propoxy.

11. Colorant de polyéthylèneimine alcoxylée alkylée selon la revendication 10, dans lequel la chaîne alcoxy contient de 5 à 50 unités répétitives alcoxyle.

12. Colorant de polyéthylèneimine alcoxylée alkylée selon la revendication 11, dans lequel la chaîne alcoxy contient de 10 à 20 unités répétitives.

13. Colorant de polyéthylèneimine alcoxylée alkylée selon l'une quelconque des revendications précédentes, dans lequel uniquement un ou deux des azotes de la polyéthylèneimine sont alcoxylés.

14. Colorant de polyéthylèneimine alcoxylée alkylée selon l'une quelconque des revendications précédentes, dans lequel uniquement un colorant réactif est lié de manière covalente à la polyéthylèneimine.

15. Composition de traitement de lavage comprenant :
(i) de 2 à 70 % en poids d'un tensioactif ; et,
(ii) de 0,01 à 20,0 % en poids du colorant de polyéthylèneimine alcoxylée alkylée selon l'une quelconque des revendications 1 à 14.

16. Composition de traitement de lavage selon la revendication 15, comprenant : (iii) un colorant de polyéthylèneimine alcoxylée non-alkylée, dans lequel le rapport molaire du colorant de polyéthylèneimine alcoxylée non-alkylée au colorant de polyéthylèneimine alcoxylée alkylée se trouve dans l'intervalle de 10:1 à 1:100.

17. Procédé domestique de traitement d'un textile, le procédé comprenant les étapes :
(i) de traitement d'un textile avec une solution aqueuse du colorant de polyéthylèneimine alcoxylée alkylée selon l'une quelconque des revendications 1 à 14, la solution aqueuse comprenant de 100 ppb à 5 000 ppm, du colorant de polyéthylèneimine alcoxylée alkylée ; et, de 0,0 g/l à 3 g/l d'un tensioactif ; et,
(ii) de rinçage éventuel et de séchage du textile.

18. Procédé domestique de traitement d'un textile selon la revendication 17, comprenant :
(iii) un colorant de polyéthylèneimine alcoxylée non-alkylée, dans lequel le rapport molaire du colorant de polyéthylèneimine alcoxylée non-alkylée au colorant de polyéthylèneimine alcoxylée alkylée se trouve dans l'intervalle de 10:1 à 1:100.

19. Procédé domestique de traitement d'un textile selon la revendication 17 ou 18, dans lequel la solution aqueuse comprend de 0,2 à 3 g/l d'un tensioactif.

20. Procédé domestique de traitement d'un textile selon la revendication 18 ou 19, dans lequel la solution aqueuse comprend un agent fluorescent dans l'intervalle de 0,0001 g/l à 0,1 g/l.
